# EUROPEAN PATENT SPECIFICATION

(11) **EP 4 567 396 B1**
(45) Date of publication and mention of the grant of the patent: **10.06.2026**
(21) Application number: 24216080.2
(22) Date of filing: 28.11.2024
(51) Int. Cl.: G01L 19/00

(54) **PRESSURE DETECTION DEVICE**
DRUCKERFASSUNGSVORRICHTUNG
DISPOSITIF DE DÉTECTION DE PRESSION

(30) Priority: 07.12.2023 JP 2023206995
(43) Date of publication of application: 11.06.2025
(73) Proprietor: Surpass Industry Co., Ltd., Gyoda-shi Saitama 361-0037 (JP)
(72) Inventor: HASUNUMA, Masahiro, Gyoda-shi, 361-0037 (JP)
(74) Representative: Patentwerk B.V.

(56) References cited:
- US-B2- 10 422 712

## Description

### BACKGROUND

### 1. TECHNICAL FIELD

The present invention relates to a pressure detection device.

### 2. DESCRIPTION OF RELATED ART

Pressure detection devices configured such that a flow path to which a fluid is introduced is formed in a flow path unit, the flow path unit is attached to a pressure detection unit, and the pressure of the fluid flowing through the flow path unit is detected by the pressure detection unit are conventionally known.

In a pressure detection device disclosed in Japanese Patent Application Laid-Open No. 2018-136216, a first connecting part formed of a magnet is provided to a diaphragm of a pressure detection unit, and a second connecting part formed of a magnetic material is provided to a diaphragm of a flow path unit.

In the pressure detection device disclosed in Japanese Patent Application Laid-Open No. 2018-136216, the first connecting part and the second connecting part are arranged attracted to each other by magnetic force in a state where the flow path unit has been attached to the pressure detection unit. Thus, when the pressure of a fluid flowing through the flow path is a negative pressure, the second connecting part is pulled to the flow path side by the pressure of the fluid, and the second connecting part pulls the first connecting part connected thereto by magnetic force to the flow path side. Accordingly, the pressure of the fluid can be detected as a negative pressure by the pressure detection part.

In the pressure detection device disclosed in Japanese Patent Application Laid-Open No. 2018-136216, the second connecting part formed of a magnetic material is joined to a flat face on the pressure detection unit side of the diaphragm of a flow path unit by an adhesive agent. However, since the second connecting part is joined to the flat face, deformation of the diaphragm due to a change in the pressure of a fluid causes a change in the stress in the joining portion between the flat face and the second connecting part. Repetition of such operation causing diaphragm deformation then causes deterioration of the joining portion, this causes the second connecting part to separate from the diaphragm, and this makes it no longer possible to properly detect the pressure of the fluid.

US10422712 B2 discloses a pressure detection device provided with a mounting mechanism which allows a flow passage unit to be detachably mounted on a pressure detection unit, and to a pressure sensor.

The present invention has been made in view of such circumstances and intends to, in a pressure detection device including a flow path unit and a pressure detection unit, prevent a connecting part joined to a pressure receiving diaphragm of the flow path unit from separating from the pressure receiving diaphragm.

### BRIEF SUMMARY

The present invention employs the following solutions in order to achieve the object described above.

A pressure detection device according to the first aspect of the present invention includes: a pressure detection unit configured to detect a pressure transferred to a pressure detection part; a flow path unit having a flow path in the flow path unit, a fluid being introduced to the flow path; and an attaching mechanism configured to detachably attach the flow path unit to the pressure detection unit. The pressure detection unit includes a pressure sensor having the pressure detection part and a first connecting part joined to the pressure detection part. The flow path unit includes a resin pressure receiving part configured to displace in response to receiving a pressure of a fluid flowing through the flow path and a second connecting part joined to the pressure receiving part. Any one of the first connecting part and the second connecting part is formed of a magnet, and the other of the first connecting part and the second connecting part is formed of a magnet or a magnetic material. In a state where the flow path unit is attached to the pressure detection unit by the attaching mechanism, the first connecting part and the second connecting part are arranged attracted to each other by magnetic force. The pressure receiving part is formed circularly in planar view, and a recess that is circular in planar view is formed at the center position. The second connecting part is formed circularly in planar view, is in contact with the bottom face of the recess, and is joined to the recess with an adhesive agent being filled between a side face of the recess and the second connecting part.

According to the pressure detection device of the first aspect of the present invention, in a state where the flow path unit has been attached to the pressure detection unit by the attaching mechanism, the first connecting part joined to the pressure detection part and the second connecting part joined to the pressure receiving part are arranged attracted to each other by magnetic force. Thus, when the pressure of a fluid flowing through the flow path is a positive pressure, the second connecting part joined to the pressure receiving part is separated from the flow path side by the pressure of the fluid, and the second connecting part causes the first connecting part to be pushed against the pressure detection part. Accordingly, the pressure of the fluid is detected as a positive pressure by the pressure detection part.

Further, when the pressure of a fluid flowing through the flow path is a negative pressure, the second connecting part joined to the pressure receiving part by the pressure of the fluid is pulled to the flow path side by the pressure of the fluid, and the second connecting part pulls the first connecting part, which is connected thereto by magnetic force, to the flow path side. Accordingly, the pressure of the fluid is detected as a negative pressure by the pressure detection part. As described above, according to the pressure detection device of the present aspect, the pressure of a fluid can be accurately detected in both cases where the pressure of the fluid is a positive pressure and a negative pressure while enhancing speed and safety of operation to change the fluid that is to be introduced to the flow path.

Further, according to the pressure detection device of the first aspect of the present invention, the second connecting part is joined to both the bottom face and the side face of the recess by the adhesive agent. Thus, even when deformation of the pressure receiving part due to a change in the pressure of a fluid causes a change in the stress at the joining portion between the second connecting part and the pressure receiving part, the state where the second connecting part and the pressure receiving part are firmly joined to each other is maintained. Thus, compared to a case where the second connecting part is joined to only the flat face, it is possible to prevent the connecting part joined to the pressure receiving part of the flow path unit from being separated from the pressure receiving part.

The pressure detection device according to the second aspect of the present invention further includes the following configuration in the first aspect. That is, the depth of the recess along an axis orthogonal to the pressure receiving part is set to be 1/3 times or greater and 1/2 times or less of the length of the second connecting part along the axis.

According to the pressure detection device of the second aspect of the present invention, the depth of the recess is 1/3 times or greater of the length of the second connecting part, this can ensure sufficient regions of the second connecting part which are joined to the recess, and thereby the second connecting part can be firmly joined to the pressure receiving part. Further, the depth of the recess is 1/2 times or less of the length of the second connecting part, and this makes it possible to prevent the ability to follow a pressure change of the pressure receiving part from compromising due to an excessively longer depth of the recess.

The pressure detection device according to the third aspect of the present invention further includes the following configuration in the first aspect or the second aspect. That is, a first outer diameter of the bottom face of the recess when viewed in planar view is set to be 1/3 times or greater and 1/2 times or less of a second outer diameter of a region of the pressure receiving part when viewed in planar view, the fluid coming into contact with the region.

According to the pressure detection device of the third aspect of the present invention, the first outer diameter of the bottom face of the recess is 1/3 times or greater of the second outer diameter of the region of the pressure receiving part with which a fluid comes into contact, and this can ensure a sufficient size of the outer diameter of the second connecting part joined to the recess and thereby ensure sufficient attractive force so that the second connecting part and the first connecting part are attracted to each other by magnetic force. Further, the first outer diameter of the bottom face of the recess is 1/2 times or less of the second outer diameter of the region of the pressure receiving part with which a fluid comes into contact, and this makes it possible to prevent the ability to follow a pressure change of the pressure receiving part from compromising due to an excessively larger first outer diameter of the bottom face of the recess.

The pressure detection device according to the fourth aspect of the present invention further includes the following configuration in the first aspect or the second aspect. That is, the outer diameter of the first connecting part about the axis is larger than the outer diameter of the second connecting part about the axis.

According to the pressure detection device of the fourth aspect of the present invention, it is possible to ensure a sufficient outer diameter of the first connecting part and thereby ensure sufficient attractive force so that the second connecting part and the first connecting part are attracted to each other by magnetic force.

According to the present invention, in a pressure detection device including a flow path unit and a pressure detection unit, it is possible to prevent a connecting part joined to a pressure receiving diaphragm of the flow path unit from separating from the pressure receiving diaphragm.

### BRIEF DESCRIPTION OF THE SEVERAL VIEWS OF THE DRAWINGS

Fig. 1 is a front view illustrating a pressure detection device of one embodiment of the present invention.
Fig. 2 is a diagram illustrating a state where a flow path unit has been removed from the pressure detection device illustrated in Fig. 1.
Fig. 3 is an arrow A-A sectional view illustrating the state where the flow path unit has been removed from the pressure detection device illustrated in Fig. 1.
Fig. 4 is a bottom view of the flow path unit illustrated in Fig. 3.
Fig. 5 is an arrow A-A sectional view of the pressure detection device illustrated in Fig. 1.
Fig. 6 is a partial enlarged view of the flow path unit illustrated in Fig. 5.
Fig. 7 is a flowchart illustrating a manufacturing method of the pressure detection device.
Fig. 8 is a sectional view illustrating a state before a recess is formed in a pressure receiving diaphragm.
Fig. 9 is a sectional view illustrating a state after the recess has been formed in the pressure receiving diaphragm.
Fig. 10 is a sectional view illustrating a state where a connecting part has been joined to the recess of the pressure receiving diaphragm.
Fig. **11** is a sectional view illustrating a state where the pressure receiving diaphragm has been joined to a flow path body.
Fig. 12 is a sectional view illustrating a state where a nut has been attached to the flow path body.
Fig. 13 is a sectional view illustrating a state where the pressure receiving diaphragm of the flow path unit of the present embodiment is deformed.
Fig. 14 is a sectional view illustrating a state where a pressure receiving diaphragm of a flow path unit of a comparative example is deformed.

### DETAILED DESCRIPTION

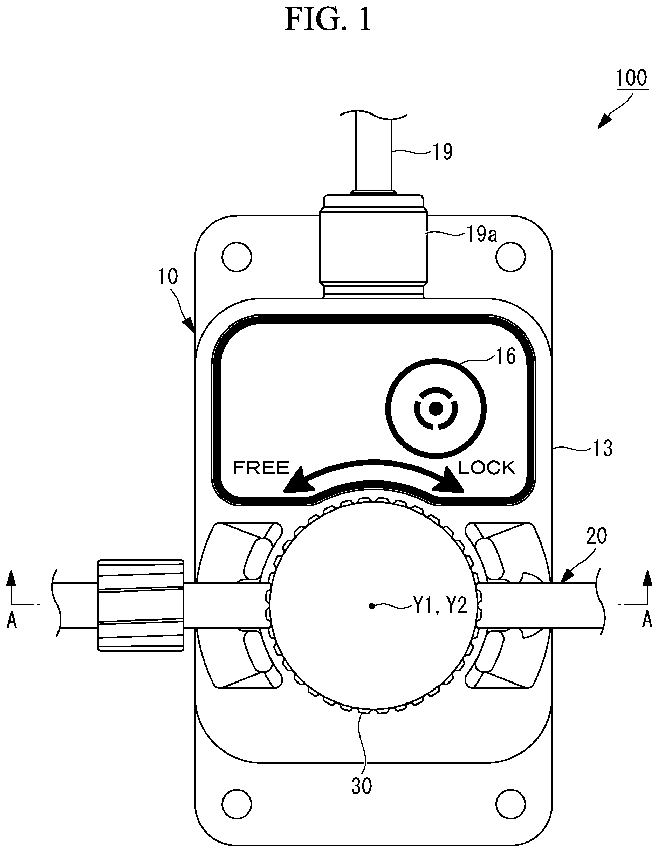

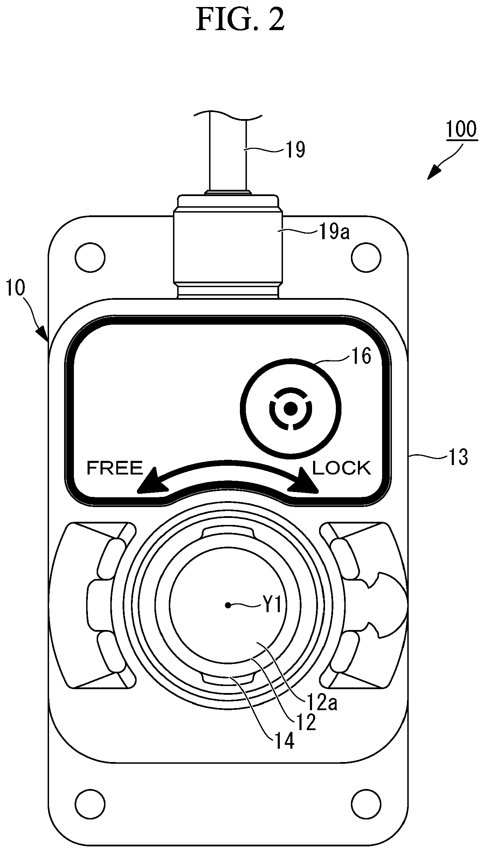

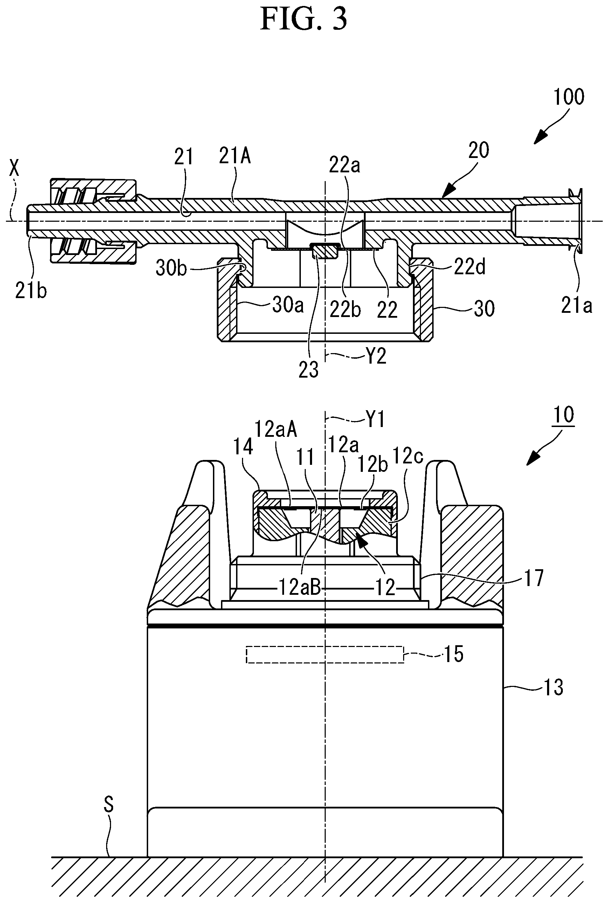

A pressure detection device 100 of one embodiment of the present invention will be described below with reference to the drawings. Fig. 1 is a front view illustrating the pressure detection device 100 of one embodiment of the present invention. Fig. 2 is a diagram illustrating a state where a flow path unit 20 has been removed from the pressure detection device 100 illustrated in Fig. 1. Fig. 3 is an arrow A-A sectional view illustrating the state where the flow path unit 20 has been removed from the pressure detection device 100 illustrated in Fig. 1.

As illustrated in Fig. 1, the pressure detection device 100 of the present embodiment includes a pressure detection unit 10 attached to an installation face S by a fastening bolt (not illustrated), the flow path unit 20 inside which a flow path 21 through which a fluid is allowed to flow is formed, and a nut 30 (attaching mechanism) configured to detachably attach the flow path unit 20 to the pressure detection unit 10.

As illustrated in Fig. 1, the pressure detection unit 10 is attached to the installation face S, and the flow path unit 20 is attached to the pressure detection unit 10 by the nut 30. The pressure detection device 100 is attached to the installation face S with the flow path unit 20 being attached to and integrated into the pressure detection unit 10 by the nut 30.

An inflow-side pipe (not illustrated) through which a fluid is allowed to flow into an inflow port 21a is attached to the inflow port 21a of the flow path unit 20 illustrated in Fig. 3, and an outflow-side pipe (not illustrated) through which a fluid flowing out of an outflow port 21b is allowed to flow is attached to the outflow port 21b of the flow path unit 20. The pressure of a fluid flowing through a flow path 21 from the inflow port 21a to the outflow port 21b is detected by the pressure detection unit 10. Herein, the fluid is, for example, a liquid such as blood or a dialysis solution.

As illustrated in Fig. 3, the pressure detection unit 10 includes a body 13 attached to the installation face S. As illustrated in Fig. 2 and Fig. 3, a cable 19 electrically connecting a pressure sensor 12 arranged inside and an external control device (not illustrated) to each other is attached to the body 13 of the pressure detection unit 10 via a cable attaching nut 19a.

Next, the pressure detection unit 10 will be described in detail with reference to Fig. 1 to Fig. 3. The pressure detection unit 10 illustrated in Fig. 1 to Fig. 3 is a device configured to detect a pressure transferred to a diaphragm (pressure detection part) 12a. The pressure detection unit 10 includes a connecting part (first connecting part) 11, the pressure sensor 12, the body 13 inside which the pressure sensor 12 is arranged, a sensor holding part 14 that holds the pressure sensor 12 at the body 13, a sensor circuit board 15 used for transferring power supply and electrical signals between the pressure sensor 12 and the cable 19, and a zero-point adjustment switch 16 used for performing zero-point adjustment of the pressure sensor 12.

The connecting part 11 is a permanent magnet formed cylindrically along the axis Y1 and is, for example, formed of neodymium or the like. The connecting part 11 is joined to a second face 12aB of the diaphragm 12a of the pressure sensor 12 by an adhesive agent (for example, an epoxy resin based adhesive agent). As illustrated in Fig. 3, the end face of the connecting part 11 joined to the diaphragm 12a is formed in a planar shape arranged on a plane orthogonal to the axis Y1. The connecting part 11 pulls a connecting part (second connecting part) 23, which is a magnetic material, by magnetic force of the permanent magnet and maintains the state where these connecting parts are in contact with each other. The connecting part 23 of the flow path unit 20 will be described later.

Note that, although the connecting part 11 is a permanent magnet and the connecting part 23 is a magnetic material in the above description, other aspects may be employed. For example, both the connecting part 11 and the connecting part 23 may be permanent magnets. Alternatively, the connecting part 11 may be a magnetic material, and the connecting part 23 may be a permanent magnet. As discussed above, in the pressure detection device 100 of the present embodiment, either one of the connecting part 11 and the connecting part 23 is formed of a magnet, and the other of the connecting part 11 and the connecting part 23 is formed of a magnet or a magnetic material. In the following, an example in which the connecting part 11 is a permanent magnet and the connecting part 23 is a magnetic material will be described.

As illustrated in Fig. 3, the pressure sensor 12 has the diaphragm 12a formed of an anti-corrosive material (for example, sapphire) as a thin film, a distortion resistive part 12b joined to the second face 12aB of the diaphragm 12a, and a base part 12c that holds the diaphragm 12a.

The pressure sensor 12 is a distortion type sensor that outputs a pressure signal in accordance with a change in the resistance of the distortion resistive part 12b that is deformed in accordance with a pressure transferred from the connecting part 23 to a first face 12aA of the diaphragm 12a. A through-hole penetrating the diaphragm 12a is formed in the base part 12c, and the second face 12aB of the diaphragm 12a is maintained at the atmospheric pressure. Thus, the pressure sensor 12 is a sensor that detects a gauge pressure based on the atmospheric pressure as a reference. As illustrated in Fig. 2, in a state where the flow path unit 20 is not attached to the pressure detection unit 10, the diaphragm 12a of the pressure sensor 12 remains to be exposed to the outside.

The sensor holding part 14 is a member formed cylindrically about the axis Y1. The sensor holding part 14 has, at the top end, the inner diameter smaller than the outer diameter of the pressure sensor 12 and thus can hold the pressure sensor 12 so that the pressure sensor 12 does not come off upward. The sensor holding part 14 holds the diaphragm 12a joined to the base part 12c by an adhesive agent (adhesive glass).

The sensor circuit board 15 has an amplifier circuit (not illustrated) that amplifies a pressure signal output by the pressure sensor 12, an interface circuit that transfers a pressure signal amplified by the amplifier circuit to a pressure signal line (not illustrated) of the cable 19, a power supply circuit (not illustrated) that transfers, to the pressure sensor 12, a power supply voltage externally supplied via the cable 19, a zero-point adjustment circuit (not illustrated) that performs zero point adjustment when the zero-point adjustment switch 16 is pressed, and the like. The zero-point adjustment circuit is a circuit that, when the zero-point adjustment switch 16 is pressed, performs adjustment so that a pressure signal output by the pressure sensor 12 at this time is set as a reference value (for example, zero).

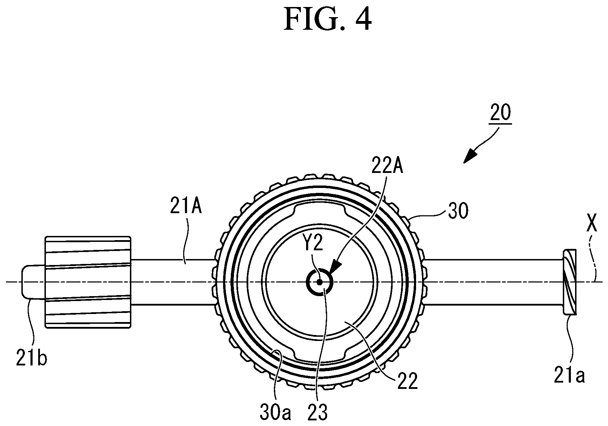

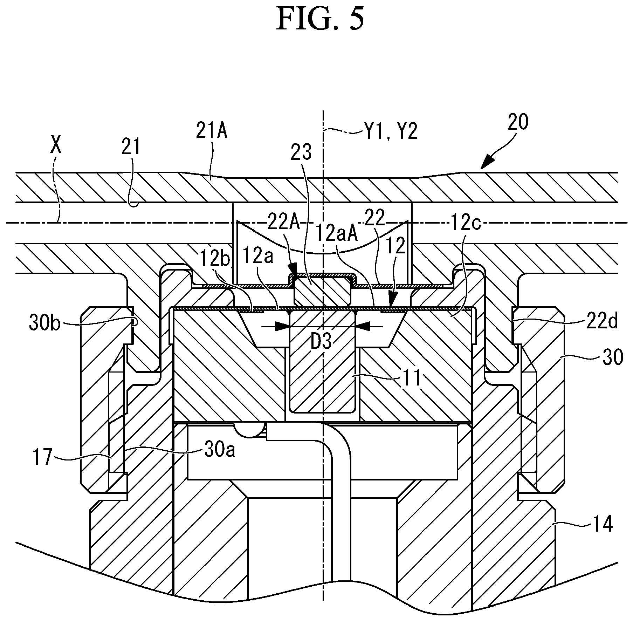

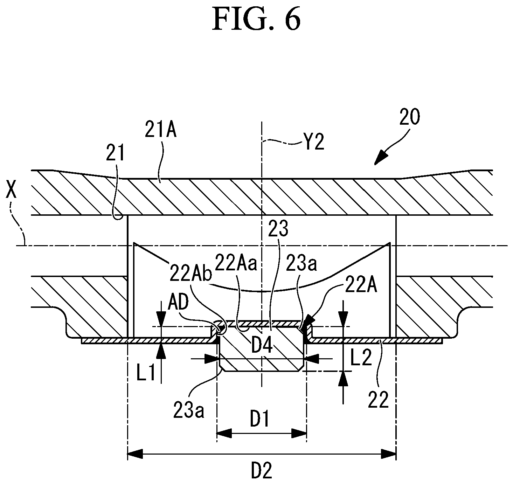

Next, the flow path unit 20 will be described in detail with reference to Fig. 3 to Fig. 6. Fig. 4 is a bottom view of the flow path unit 20 illustrated in Fig. 3. Fig. 5 is an arrow A-A sectional view of the pressure detection device 100 illustrated in Fig. 1. Fig. 6 is a partial enlarged view of the flow path unit 20 illustrated in Fig. 5.

As illustrated in Fig. 3, the flow path unit 20 includes a flow path body 21A inside which the flow path 21 through which a fluid is allowed to flow in the flow direction extending along the axis X from the inflow port 21a to the outflow port 21b is formed, a pressure receiving diaphragm 22 that displaces in response to receiving the pressure of the fluid flowing through the flow path 21 at the first face 22a, and a connecting part (second connecting part) 23 joined to the second face 22b of the pressure receiving diaphragm 22.

The pressure receiving diaphragm 22 is a member formed of an anti-corrosive material (for example, a silicone resin material) as a thin film. The pressure receiving diaphragm 22 is a member formed circularly in planar view about the axis Y2 as the central axis, and the outer circumferential edge thereof is joined to the flow path 21 by adhesion or welding. The pressure receiving diaphragm 22 is formed as a thin film and is thus deformed in a direction along the axis Y2 by the pressure of a fluid flowing through the flow path 21. As illustrated in Fig. 6, the pressure receiving diaphragm 22 is circular in planar view when viewed along the axis Y1, and a recess 22A that is circular in planar view is formed at the center position of the pressure receiving diaphragm 22.

The connecting part 23 is a metallic magnetic material formed cylindrically along the axis Y2 orthogonal to the pressure receiving diaphragm 22 and is formed of an iron material such as S45C defined in the JIS standard. As illustrated in Fig. 4, the connecting part 23 is formed circularly in planar view. As illustrated in Fig. 5, the connecting part 23 is arranged attracted to the connecting part 11, which is a permanent magnet, by the magnetic force thereof in a state where the flow path unit 20 has been attached to the pressure detection unit 10 by the nut 30.

As illustrated in Fig. 6, the connecting part 23 is joined to the recess 22A in contact with the bottom face 22Aa of the recess 22A and with an adhesive agent AD being filled between the side face 22Ab of the recess 22A and the connecting part 23. The connecting part 23 is joined to the bottom face 22Aa and the side face 22Ab of the recess 22A by the adhesive agent AD. The adhesive agent AD is an epoxy resin based adhesive agent.

A C-face 23a is formed on both one end side and the other end side along the axis Y2 of the connecting part 23. The C-face 23a is a chamfered portion formed annularly in the circumferential direction about the axis Y1 at the end in the radial direction orthogonal to the axis Y1. Since the C-face 23a is formed in both one end side and the other end side along the axis Y2 of the connecting part 23, the same is resulted regardless of whether one end side or the other end side of the connecting part 23 along the axis Y2 is joined to the bottom face 22Aa of the recess 22A. Therefore, when the operator joins the connecting part 23 to the bottom face 22Aa of the recess 22A, the operation to confirm the positions of the one end side and the other end of the connecting part 23 along the axis Y2 is no longer necessary, and this improves operability.

Further, compared to a case where the C-face 23a is not formed on the connecting part 23, the volume of the clearance between the recess 22A and the connecting part 23 joined to the bottom face 22Aa of the recess 22A is increased. Accordingly, compared to the case where the C-face 23a is not formed on the connecting part 23, the amount of the adhesive agent AD filled in the clearance between the connecting part 23 and the recess 22A is increased, and the joining force between the connecting part 23 and the pressure receiving diaphragm 22 is increased.

The depth L1 of the recess 22A along the axis Y2 orthogonal to the pressure receiving diaphragm 22 is, for example, set to be 1/3 times or greater and 1 time or less of the length L2 of the connecting part 23 along the axis Y2. Further, the depth L1 may be set to be 1/3 times or greater and 1/2 times or less of the length L2. The first outer diameter D1 of the bottom face 22Aa of the recess 22A when viewed in planar view is set to be 1/3 times or greater and 1/2 times or less of the second outer diameter D2 of a region of the pressure receiving diaphragm 22 with which a fluid comes into contact when viewed in planar view.

As illustrated in Fig. 5, in the state where the flow path unit 20 has been attached to the pressure detection unit 10, the connecting part 23 of the flow path unit 20 is in contact with the first face 12aA of the diaphragm 12a of the pressure detection unit 10. The connecting part 23 transfers, to the diaphragm 12a, the pressure of a fluid flowing through the flow path 21.

As illustrated in Fig. 5, in the state where the flow path unit 20 has been attached to the pressure detection unit 10, the axis Y1 and the axis Y2 are arranged at the same position. As illustrated in Fig. 5 and Fig. 6, the outer diameter D3 of the connecting part 11 about the axis Y1 is larger than the outer diameter D4 of the connecting part 23 about the axis Y2.

Next, the structure for attaching the flow path unit 20 to the pressure detection unit 10 by the nut 30 will be described. As illustrated in Fig. 3, an annular groove 22d extending circumferentially about the axis Y2 is formed in the outer circumferential face on the bottom end side of the flow path unit 20. On the other hand, an annular protrusion 30b extending circumferentially about the axis Y2 is formed in the inner circumferential face of the nut 30. The nut 30 formed of an elastically deformable material (for example, a resin material) is pushed into the annular groove 22d, and thereby the annular protrusion 30b is in engagement with the annular groove 22d.

In the state where the annular protrusion 30b is in engagement with the annular groove 22d as illustrated in Fig. 3, a slight clearance is provided between the outer circumferential face of the annular protrusion 30b and the inner circumferential face of the annular groove 22d. Thus, the nut 30 is rotatable relatively about the axis Y1 when attached to the pressure detection unit 10. This enables the operator to rotate the nut 30 about the axis Y1 while fixing the pressure detection unit 10 to the installation face S.

As illustrated in Fig. 3, the nut 30 is a circular, annular member in which an internal thread 30a extending circumferentially about the axis Y2 is formed in the inner circumferential face thereof. The nut 30 is a mechanism that detachably attaches the flow path unit 20 to the pressure detection unit 10 by fastening the internal thread 30a into an external thread 17 formed on the pressure detection unit 10 or by releasing the fastening.

The operator fastens the internal thread 30a of the nut 30 and the external thread 17 of the pressure detection unit 10 to each other by rotating the nut 30 in the fastening direction (direction indicated by "LOCK" in Fig. 1, Fig. 2) about the axis Y1 while gripping the flow path unit 20. As the internal thread 30a of the nut 30 and the external thread 17 of the pressure detection unit 10 are fastened to each other, the connecting part 23 gradually comes close to the first face 12aA of the diaphragm 12a and finally comes into contact with the first face 12aA of the diaphragm 12a, and this results in the state illustrated in Fig. 5.

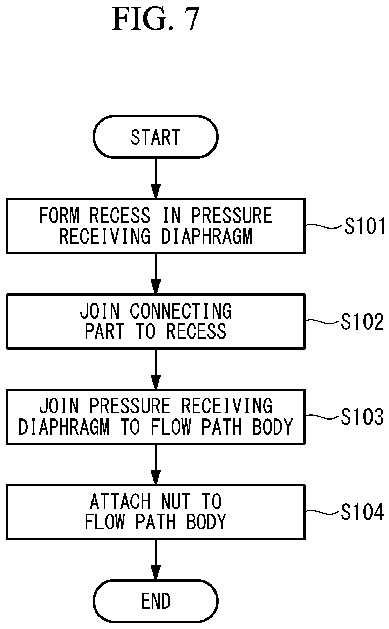

Next, a manufacturing method of the pressure detection device 100 according to one embodiment of the present invention will be described. Fig. 7 is a flowchart illustrating the manufacturing method of the pressure detection device 100.

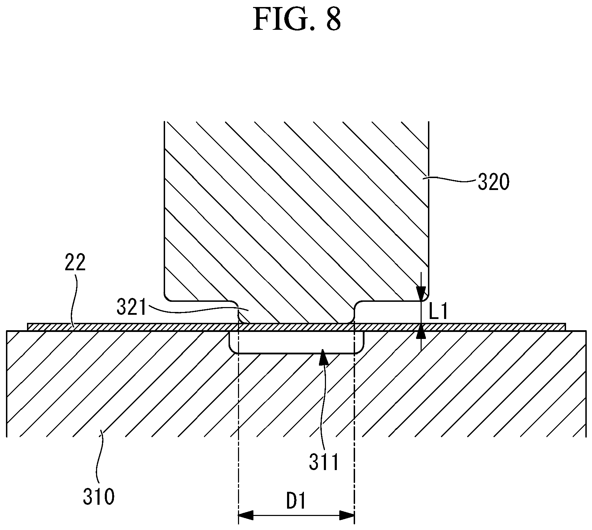

In step S101, the operator forms the recess 22A in the pressure receiving diaphragm 22. As illustrated in Fig. 8, the operator installs, to a lower die 310, a flat pressure receiving diaphragm 22 in which the recess 22A is not formed. In the lower die 310, a hollow 311 formed in a shape corresponding to the recess 22A is formed.

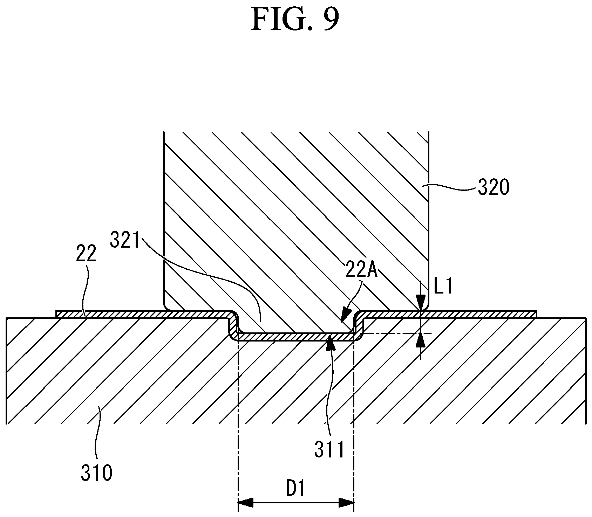

The operator pushes an upper die 320 against the lower die 310 having the installed pressure receiving diaphragm 22 and inserts a protrusion 321 formed to the upper die 320 into the hollow 311 of the lower die 310 to have a state illustrated in Fig. 9. Fig. 9 is a sectional view illustrating a state after the recess 22A has been formed in the pressure receiving diaphragm 22. Since the depth L1 of the recess 22A is set to be 1/2 times or less of the length L2 of the connecting part 23 along the axis Y2, a failure of the pressure receiving diaphragm 22 being excessively deformed and broken can be prevented.

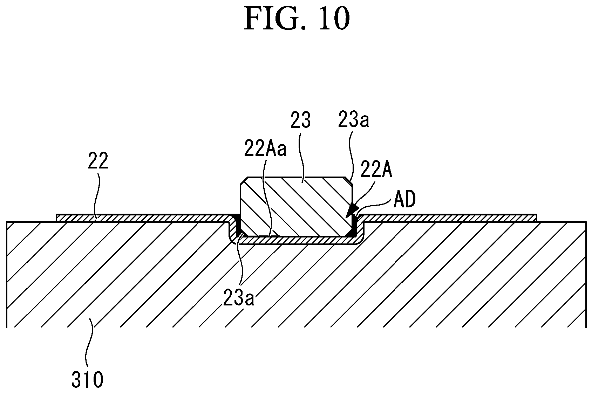

In step S102, the operator removes the upper die 320 from the lower die 310 and joins the connecting part 23 to the recess 22A formed in the pressure receiving diaphragm 22. The operator applies the adhesive agent AD to the bottom face 22Aa of the recess 22A and inserts the connecting part 23 into the bottom face 22Aa, to which the adhesive agent AD has been applied, to have a state illustrated in Fig. 10. Fig. 10 is a sectional view illustrating the state where the connecting part 23 has been joined to the recess 22A of the pressure receiving diaphragm 22.

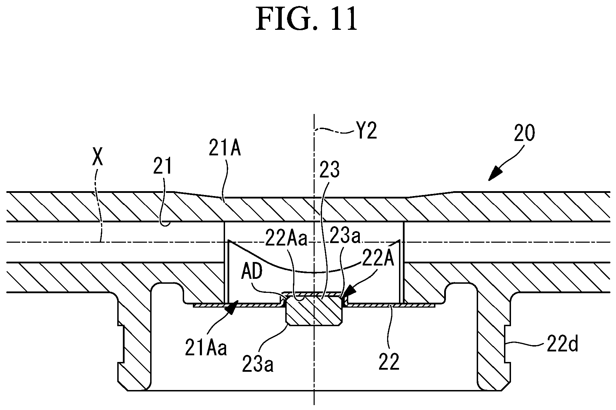

In step S103, the operator joins the pressure receiving diaphragm 22 to the flow path body 21A. The operator joins the pressure receiving diaphragm 22 to the flow path body 21A by adhesion or welding so as to close an opening 21Aa formed cylindrically about the axis Y2 to the flow path body 21A, resulting in a state illustrated in Fig. 11. Fig. 11 is a sectional view illustrating the state where the pressure receiving diaphragm 22 has been joined to the flow path body 21A.

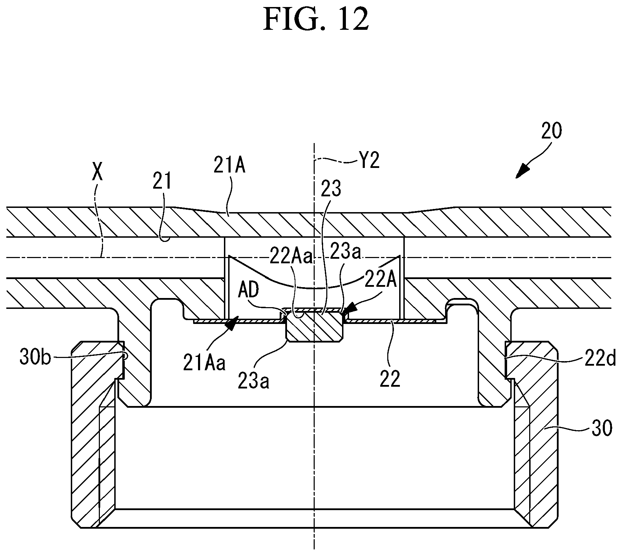

In step S104, the operator attaches the nut 30 to the flow path body 21A. The operator pushes the nut 30 into the annular groove 22d and partially elastically deforms the flow path body 21A to engage the annular protrusion 30b with the annular groove 22d to have a state illustrated in Fig. 12. Fig. 12 is a sectional view illustrating the state where the nut 30 has been attached to the flow path body 21A.

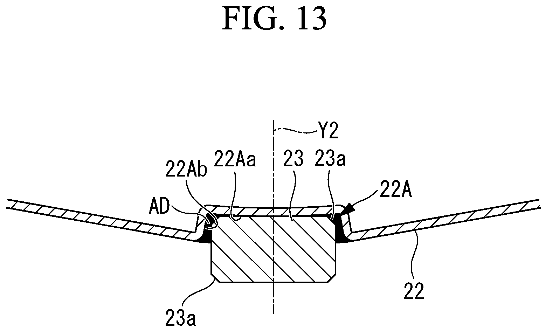

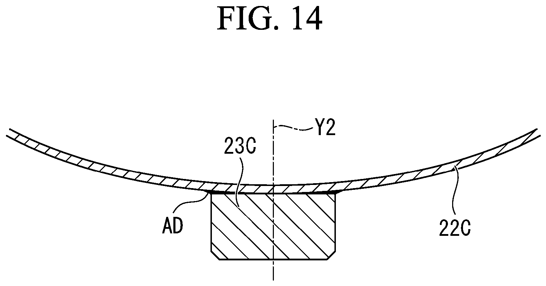

Herein, the joining state between the connecting part 23 and the pressure receiving diaphragm 22 when the pressure receiving diaphragm 22 is deformed will be described with reference to Fig. 13 and Fig. 14. Fig. 13 is a sectional view illustrating a state where the pressure receiving diaphragm 22 of the flow path unit 20 of the present embodiment is deformed. Fig. 14 is a sectional view illustrating a state where a pressure receiving diaphragm 22C of a flow path unit of a comparative example is deformed.

As illustrated in Fig. 13, since the recess 22A is formed in the pressure receiving diaphragm 22 of the present embodiment, the state where the bottom face 22Aa and the side face 22Ab of the recess 22A hold the connecting part23 via the adhesive agent AD is maintained even when the pressure receiving diaphragm 22 is deformed.

In contrast, as illustrated in Fig. 14, since the recess 22A is not formed in the pressure receiving diaphragm 22C of the comparative example, only the contact interface between the pressure receiving diaphragm 22C and the connecting part 23C is held by the adhesive agent AD when the pressure receiving diaphragm 22C is deformed. In the comparative example, it is not possible to ensure a sufficient region to fill the adhesive agent AD that holds the joining between the pressure receiving diaphragm 22C and the connecting part 23C. Further, in the comparative example, deformation of the pressure receiving diaphragm 22C directly acts on the portion where the pressure receiving diaphragm 22C and the connecting part 23C are in contact. Thus, if such deformation of the pressure receiving diaphragm 22C is repeated, the joining force at the portion where the pressure receiving diaphragm 22C and the connecting part 23C are in contact is likely to decrease.

The effects and advantages achieved by the pressure detection device 100 of the present embodiment described above will be described.

According to the pressure detection device 100 of the present embodiment, in a state where the flow path unit 20 has been attached to the pressure detection unit 10 by the nut 30, the connecting part 11 joined to the diaphragm 12a and the connecting part 23 joined to the pressure receiving diaphragm 22 are arranged attracted to each other by magnetic force. Thus, when the pressure of a fluid flowing through the flow path 21 is a positive pressure, the connecting part 23 joined to the pressure receiving diaphragm 22 is separated from the flow path 21 side by the pressure of the fluid, and the connecting part 23 causes the connecting part 11 to be pushed against the diaphragm 12a. Accordingly, the pressure of the fluid is detected as a positive pressure by the diaphragm 12a.

Further, when the pressure of a fluid flowing through the flow path 21 is a negative pressure, the connecting part 23 joined to the pressure receiving diaphragm 22 by the pressure of the fluid is pulled to the flow path 21 side by the pressure of the fluid, and the connecting part 23 pulls the connecting part 11, which is connected thereto by magnetic force, to the flow path 21 side. Accordingly, the pressure of the fluid is detected as a negative pressure by the diaphragm 12a. As described above, according to the pressure detection device 100 of the present embodiment, the pressure of a fluid can be accurately detected in both cases where the pressure of the fluid is a positive pressure and where the pressure of the fluid is a negative pressure while enhancing speed and safety of operation to change the fluid that is to be introduced to the flow path 21.

Further, according to the pressure detection device 100 of the present embodiment, the connecting part 23 is joined to both the bottom face 22Aa and the side face 22Ab of the recess 22A by the adhesive agent AD. Thus, even when deformation of the pressure receiving diaphragm 22 due to a change in the pressure of a fluid causes a change in the stress at the joining portion between the connecting part 23 and the pressure receiving diaphragm 22, the state where the connecting part 23 and the pressure receiving diaphragm 22 are firmly joined to each other is maintained. Thus, compared to a case where the connecting part 23 is joined to only the flat face, it is possible to prevent the connecting part 23 joined to the pressure receiving diaphragm 22 of the flow path unit 20 from being separated from the pressure receiving diaphragm 22.

According to the pressure detection device 100 of the present embodiment, the depth L1 of the recess 22A is 1/3 times or greater of the length L2 of the connecting part 23, this can ensure sufficient regions of the connecting part 23 which are joined to the recess 22A, and thereby the connecting part 23 can be firmly joined to the pressure receiving diaphragm 22. Further, the depth L1 of the recess 22A is 1/2 times or less of the length L2 of the connecting part 23, and this makes it possible to prevent the ability to follow a pressure change of the pressure receiving diaphragm 22 from compromising due to an excessively longer depth L1 of the recess 22A.

According to the pressure detection device 100 of the present embodiment, the first outer diameter D1 of the bottom face 22Aa of the recess 22A is 1/3 times or greater of the second outer diameter D2 of the region of the pressure receiving diaphragm 22 with which a fluid comes into contact, and this can ensure a sufficient size of the outer diameter of the connecting part 23 joined to the recess 22A and thereby ensure sufficient attractive force so that the connecting part 23 and the connecting part 11 are attracted to each other by magnetic force. Further, the first outer diameter D1 of the bottom face 22Aa of the recess 22A is 1/2 times or less of the second outer diameter D2 of the region of the pressure receiving diaphragm 22 with which a fluid comes into contact, and this makes it possible to prevent the ability to follow a pressure change of the pressure receiving diaphragm 22 from compromising due to an excessively larger first outer diameter D1 of the bottom face 22Aa of the recess 22A.

According to the pressure detection device 100 of the present embodiment, it is possible to ensure a sufficient outer diameter of the connecting part 11 and thereby ensure sufficient attractive force so that the connecting part 23 and the connecting part 11 are attracted to each other by magnetic force.

## Claims

1. A pressure detection device (100) comprising:
a pressure detection unit (10) configured to detect a pressure transferred to a pressure detection part (12a);
a flow path unit (20) having a flow path (21) formed in the flow path unit (20), a fluid being allowed to flow through the flow path (21); and
an attaching mechanism (30) configured to detachably attach the flow path unit (20) to the pressure detection unit (10),
wherein the pressure detection unit (10) includes
a pressure sensor (12) having the pressure detection part (12a), and
a first connecting part (11) joined to the pressure detection part (12a),
wherein the flow path unit (20) includes
a resin pressure receiving part (22) configured to displace in response to receiving a pressure of a fluid flowing through the flow path (21), and
a second connecting part (23) joined to the pressure receiving part (22),
wherein any one of the first connecting part (11) and the second connecting part (23) is formed of a magnet, and the other of the first connecting part (11) and the second connecting part (23) is formed of a magnet or a magnetic material,
wherein in a state where the flow path unit (20) is attached to the pressure detection unit (10) by the attaching mechanism (30), the first connecting part (11) and the second connecting part (23) are arranged attracted to each other by magnetic force,
**characterized in that**
the pressure receiving part (22) is formed circularly in planar view, and a recess (22A) that is circular in planar view is formed at the center position, and
wherein the second connecting part (23) is formed circularly in planar view, is in contact with the bottom face of the recess (22A), and is joined to the recess (22A) with an adhesive agent being filled between a side face of the recess (22A) and the second connecting part (23).

2. The pressure detection device (100) according to claim 1, wherein the depth of the recess (22A) along an axis (Y2) orthogonal to the pressure receiving part (22) is set to be 1/3 times or greater and 1/2 times or less of the length of the second connecting part (23) along the axis (Y2).

3. The pressure detection device (100) according to claim 1 or 2, wherein a first outer diameter (D1) of the bottom face of the recess (22A) when viewed in planar view is set to be 1/3 times or greater and 1/2 times or less of a second outer diameter (D2) of a region of the pressure receiving part (22) when viewed in planar view, the fluid coming into contact with the region.

4. The pressure detection device (100) according to claim 1, wherein the outer diameter of the first connecting part (11) about an axis orthogonal to the pressure receiving part (22) is larger than the outer diameter of the second connecting part (23) about the axis.

## Patentansprüche

1. Druckerfassungsvorrichtung (100), umfassend:
eine Druckerfassungseinheit (10), die dazu konfiguriert ist, einen auf einen Druckerfassungsteil (12a) übertragenen Druck zu erfassen;
eine Strömungswegeinheit (20), die einen in der Strömungswegeinheit (20) ausgebildeten Strömungsweg (21) aufweist, wobei ein Fluid durch den Strömungsweg (21) strömen kann; und
einen Befestigungsmechanismus (30), der dazu konfiguriert ist, die Strömungswegeinheit (20) lösbar an der Druckerfassungseinheit (10) zu befestigen,
wobei die Druckerfassungseinheit (10) Folgendes einschließt
einen Drucksensor (12) mit dem Druckerfassungsteil (12a), und
ein erstes Verbindungsteil (11), das mit dem Druckerfassungsteil (12a) verbunden ist,
wobei die Strömungswegeinheit (20) Folgendes einschließt
ein Harz-Druckaufnahmeteil (22), das dazu konfiguriert ist, sich in Reaktion auf das Aufnehmen eines Drucks eines durch den Strömungsweg (21) strömenden Fluids zu verschieben, und
ein zweites Verbindungsteil (23), das mit dem Druckaufnahmeteil (22) verbunden ist,
wobei eines von dem ersten Verbindungsteil (11) und dem zweiten Verbindungsteil (23) aus einem Magneten gebildet ist und das andere von dem ersten Verbindungsteil (11) und dem zweiten Verbindungsteil (23) aus einem Magneten oder einem magnetischen Material gebildet ist,
wobei in einem Zustand, in dem die Strömungswegeinheit (20) über den Befestigungsmechanismus (30) an der Druckerfassungseinheit (10) befestigt ist,
das erste Verbindungsteil (11) und das zweite Verbindungsteil (23) derart angeordnet sind, dass sie sich durch Magnetkraft anziehen, **dadurch gekennzeichnet, dass** das Druckaufnahmeteil (22) in Draufsicht kreisförmig ausgebildet ist und eine in Draufsicht kreisförmige Aussparung (22A) an der Mittelposition ausgebildet ist, und
wobei das zweite Verbindungsteil (23) in Draufsicht kreisförmig ausgebildet ist, mit der Bodenfläche der Aussparung (22A) in Kontakt steht und mit der Aussparung (22A) verbunden ist, wobei ein Klebstoff zwischen einer Seitenfläche der Aussparung (22A) und dem zweiten Verbindungsteil (23) eingebracht ist.

2. Druckerfassungsvorrichtung (100) nach Anspruch 1, wobei die Tiefe der Aussparung (22A) entlang einer Achse (Y2) orthogonal zu dem Druckaufnahmeteil (22) auf das 1/3-Fache oder mehr und das 1/2-Fache oder weniger der Länge des zweiten Verbindungsteils (23) entlang der Achse (Y2) eingestellt ist.

3. Druckerfassungsvorrichtung (100) nach Anspruch 1 oder 2, wobei ein erster Außendurchmesser (D1) der Bodenfläche der Aussparung (22A) in Draufsicht auf das 1/3-Fache oder mehr und das 1/2-Fache oder weniger eines zweiten Außendurchmessers (D2) eines Bereichs des Druckaufnahmeteils (22) in Draufsicht eingestellt ist, wobei das Fluid mit dem Bereich in Kontakt kommt.

4. Druckerfassungsvorrichtung (100) nach Anspruch 1, wobei der Außendurchmesser des ersten Verbindungsteils (11) um eine Achse orthogonal zu dem Druckaufnahmeteil (22) größer ist als der Außendurchmesser des zweiten Verbindungsteils (23) um die Achse.

## Revendications

1. Dispositif de détection de pression (100) comprenant :
une unité de détection de pression (10) configurée pour détecter une pression transférée à une partie de détection de pression (12a) ;
une unité chemin d'écoulement (20) présentant un chemin d'écoulement (21) formé dans l'unité chemin d'écoulement (20), un fluide pouvant s'écouler à travers le chemin d'écoulement (21) ; et
un mécanisme de fixation (30) configuré pour fixer de manière détachable l'unité chemin d'écoulement (20) à l'unité de détection de pression (10),
dans lequel l'unité de détection de pression (10) inclut
un capteur de pression (12) présentant la partie de détection de pression (12a), et
une première partie de liaison (11) reliée à la partie de détection de pression (12a),
dans lequel l'unité chemin d'écoulement (20) inclut
une partie de réception de pression de résine (22) configurée pour se déplacer en réponse à la réception d'une pression d'un fluide circulant dans le chemin d'écoulement (21), et
une seconde partie de liaison (23) reliée à la pièce de réception de pression (22),
dans lequel l'une quelconque de la première partie de liaison (11) et de la seconde partie de liaison (23) est formée d'un aimant, et l'autre de la première partie de liaison (11) et de la seconde partie de liaison (23) est formée d'un aimant ou d'un matériau magnétique,
dans lequel, dans un état où l'unité chemin d'écoulement (20) est fixée à l'unité de détection de pression (10) par le mécanisme de fixation (30), la première partie de liaison (11) et la seconde partie de liaison (23) sont agencées de manière à être attirées l'une vers l'autre par la force magnétique, **caractérisé en ce que** la partie de réception de pression (22) est dotée d'une forme circulaire dans une vue en plan, et un renfoncement (22A) qui est circulaire dans une vue en plan est formé en position centrale, et
dans lequel la seconde partie de liaison (23) est dotée d'une forme circulaire dans une vue en plan, est en contact avec la face inférieure du renfoncement (22A) et est reliée au renfoncement (22A), un agent adhésif étant introduit entre une face latérale du renfoncement (22A) et la seconde partie de liaison (23).

2. Dispositif de détection de pression (100) selon la revendication 1, dans lequel la profondeur du renfoncement (22A) le long d'un axe (Y2) perpendiculaire à la partie de réception de pression (22) est fixée à 1/3 fois ou plus et 1/2 fois ou moins de la longueur de la seconde partie de liaison (23) le long de l'axe (Y2).

3. Dispositif de détection de pression (100) selon la revendication 1 ou 2, dans lequel un premier diamètre extérieur (D1) de la face inférieure du renfoncement (22A) dans une vue en plan est fixé à 1/3 fois ou plus et 1/2 fois ou moins d'un second diamètre extérieur (D2) d'une région de la partie de réception de pression (22) dans une vue en plan, le fluide entrant en contact avec la région.

4. Dispositif de détection de pression (100) selon la revendication 1, dans lequel le diamètre extérieur de la première partie de liaison (11) autour d'un axe perpendiculaire à la partie de réception de pression (22) est plus grand que le diamètre extérieur de la seconde partie de liaison (23) autour de l'axe.
